# EUROPEAN PATENT APPLICATION

(11) **EP 2 415 661 A1**
(43) Date of publication of application: **08.02.2012**
(21) Application number: 10758090.4
(22) Date of filing: 04.03.2010
(51) Int. Cl.: B64C 1/10, B29C 70/30, B29C 70/48

(54) **STRUCTURE FOR ASSEMBLY OF THE PRESSURE BULKHEAD OF AN AIRCRAFT**

(30) Priority: 31.03.2009 ES 200930018
(71) Applicant: Airbus Operations, S.L., 28906 Getafe Madrid (ES)
(72) Inventor: VERA VILLARES, Enrique, E-28903 GETAFE (Madrid) (ES); OUTON HERNÁNDEZ, Ignacio, E-28224 POZUELO DE ALARCÓN (Madrid) (ES)
(74) Representative: Ungria Lopez, Javier
(86) International application number: PCT/ES2010/070115
(87) International publication number: WO 2010/112644

(57) **Abstract**

The structure comprises: a rim angle (22) with a front portion and a rear portion, the latter being slanted upward and backward and connected to the bulkhead (1); a simple frame (18), being connected to the front portion of the bulkhead (22); a buttstrap (23), being connected between the front portion of the rim angle (22) and the skin (6, 7) of the fuselage of the aircraft; and tension fittings (24, 25), being fitted between the buttstrap (23) and the longitudinal stringers (8, 9) of the fuselage.

## Description

### FIELD OF THE INVENTION

This invention is designed for the aeronautical industry, in the field of aircraft design and construction.

### OBJECT OF THE INVENTION

The present invention, as stated in the title of this specification, is for the purpose of providing an aircraft pressure bulkhead assembly structure.

The pressure bulkhead is the element which closes off the pressurized area of an aircraft aftward. From a structural standpoint, this element is concave in shape from the side of the pressurized area and substantially hemispherical so as to make best use of the bulkhead material for absorbing the loads due to the pressure differential, referred to hereinafter as pressure loads.

Another object of the present invention is to provide an assembly structure such that all of the parts of which the same is comprised can be easily manufactured in a composite material with the resulting savings on weight thus entailed, which is a determining factor in the aeronautical industry.

### STATE OF THE ART PRIOR TO THE INVENTION

Conventionally, pressure bulkheads are assembled to the aircraft by means of a frame which divides a forward section from an aft section of the fuselage, these sections respectively being the pressurized and non pressurized areas of the aircraft. In this configuration, the bulkhead assembly must mainly be capable, in addition to absorbing the pressure loads, of providing proper strength for joining the forward and aft sections of the fuselage together as well as the adequate stiffening of the fuselage.

For this purpose, the known pressure bulkhead assembly structures incorporate a cylindrically-symmetrical frame (following the contour of the fuselage), being defined by the section of symmetry thereof, as described in following.

The frame is comprised of a center web, an upper flange and a lower flange. Conventionally, the upper flange of the frame has a front portion and a rear portion.

The pressure bulkhead is fitted to the rear portion of the upper flange of the frame, the rear portion projecting upward and backward, slanted to a certain degree in relation to the skin. This slant is determined by a line tangent to the pressure bulkhead, being slanted, as a guideline, on an approximate 60" angle. Conventionally, the bulkhead is fixed to the frame by means of mechanical means of fixing, such as rivets.

Apart from the above, the skin of the forward section and of the aft section of the fuselage is fixed to the lower flange of the frame by means of a reinforcement plate known as a buttstrap which is placed between the lower flange of the frame and the skin. Conventionally, the connection between the lower flange of the frame and the skin is made by means of mechanical means, such as rivets.

In order to assure the continuity of the coupling of the forward and aft sections of the fuselage and thus the continuity of the forces to be absorbed by the stringers and the skin of the respective sections, a known assembly structure incorporating some front and rear tension fittings is incorporated. These tension fittings couple the stringers and the skin of the forward section to the stringers and skin of the aft section of the fuselage by means of the frame. Each one of these tension fittings is fixed on one side to the stringers and on the other side to the frame by mechanical means, such as rivets. The tension fittings are conventionally fixed to the frame both by means of the center web as well as by means of the front portion of the upper flange thereof. The rear tension fittings are conventionally fixed to the frame solely by means of the center web thereof,

Also having the function of assuring the continuity of the coupling between the forward and aft sections, as well as a reinforcement for the absorbing of the pressure loads and therefore to take the load off the frame, structural elements are known which, being placed on the pressurized area side, essentially consist of struts which are coupled between the frame and on another reinforcing frame connected to the stringers of the forward section.

The elements of the conventional pressure bulkhead assembly structure, in other words, the frame, the buttstrap, the tension fittings and the reinforcement frames and the struts are conventionally made of metal. In particular, the frame necessarily has to be made of metal using a machining technique, considering the forces it must absorb by its composition as has been described, taking into account that this provides optimum strength and minimal weight at low cost. Thus, thinking of manufacturing in a composite material by means of the conventional RTM technique, the direct solution of manufacturing the frame of the known assembly structure by means of this technique, which would be considered ideal for this case, still entails serious drawbacks. First of all, it would entail a disproportionate design of the frame, considering the number of layers of directional fibers which would have to be layered in order to provide the frame with the proper strength. Secondly, the frame to be manufactured would be vulnerable to the problem of layer delamination, especially in the area where the center web and the upper flange intersect, where forces in a direction perpendicular to the laminating would be concentrated. Thirdly, this would require relatively complex implements due to the relatively complex shape of the frame section.

### DESCRIPTION OF THE INVENTION

For the purpose of providing a solution to the drawbacks of the state of the art, this invention provides a pressure bulkhead assembly structure which can be easily manufactured completely in composite material.

The pressure bulkhead assembly structure of this invention is designed, as is the conventional structure, also to couple the forward section of the aft section of the fuselage corresponding respectively to the pressurized and non pressurized areas of the aircraft. Thus, the bulkhead assembly structure must be capable, in addition to absorbing the pressure loads, of providing the proper strength for the coupling between the forward and aft sections of the fuselage, a well as the transversal stiffening of the fuselage.

For this purpose, the pressure bulkhead assembly structure claimed incorporates, unlike the known assembly structure, a simple frame and a rim angle, both of these elements having a cylindrical symmetry (following the contour of the fuselage) and therefore being defined by their section of symmetry, as described in following.

The rim angle has the function of receiving the pressure loads from the bulkhead, It is **characterized in that** it is L-shaped, with two straight portions: a front portion and a rear portion. Thus, the pressure bulkhead is connected to the rear portion of the rim angle, the rear portion projecting upward and backward at a certain slant in relation to the skin, the slant being determined by a line tangent to the pressure bulkhead.

Apart from the above, the simple frame has the function of stiffening the transversal section of the fuselage, in a manner not linked to the function of absorbing the pressure loads from the bulkhead, which is provided by the rim angle. For this purpose, the frame has an upper flange, a center web and a lower flange.

The simple frame is connected to the rim angle, and the frame and ring combined are fixed to the skin with a reinforcement plate named buttstrap in between the front portion of the rim angle and the skin. Both the front section and well as the rear section of the skin are fixed to the front portion of the rim angle such that said front portion of the ring has the function of receiving the forces of the coupling of the fuselage sections.

In the placement of the simple frame on the rim angle, it is found to be appropriate to situate the center web of the frame near the angle between the front portion and the rear portion of the rim angle in order to provide an effect of the simple frame pressing on the rim angle, which makes it possible to improved the distribution of the pressure loads on the rim angle. In particular, the simple frame may have a lower flange which extends solely forward in relation to the center web, which makes it possible to optimize this technical effect.

To ensure the continuity of the coupling of the forward and aft sections of the fuselage and therefore the continuity of the forces to be absorbed by the stringers and the skin of the respective sections, the assembly structure incorporates some tension fittings, front and back, which couple the stringers to the buttstrap.

With this configuration, the need of the simple frame having to withstand tension, as in the conventional frame, is eliminated, therefore doing away with the need of its being manufactured in metal. Thus, the forces due to the pressure loads are redistributed toward the sections of the fuselage, thus avoiding the need of their being absorbed by the conventional frame.

Additionally, the assembly structure can incorporate a number of stiffening plates for preventing local buckling of the simple frame of the assembly structure. These stiffening plates are arranged along the length of the frame, being connected between the frame and the rim angle.

The simple frame elements, rim angle and buttstrap can each consist of one single section or of a number of sections, arranged along the length of the contour of the fuselage. In the latter of these cases, when it is necessary to assure the continuity of stress among the different sections, conventional coupling elements, such as joint fittings, can be put into place. In particular, this will be necessary on the frame, Thus, a plate overlapping every pair of sections can be placed among the different frame sections.

To connect the different elements comprising the assembly structure, both means of fixing and means of joining are considered. The means of fixing are distinguished from the means of joining in that the means of fixing require connecting elements other than the elements to be connected. The means of fixing can be mechanical (threaded, such as screws: or unthreaded, such a blind rivets or non-blind rivets) or chemical (such as adhesives, by bonding or cobonding: the latter provided that the parts to be connected are made of a composite material). The means of joining, in turn, can be mechanical (such as tongue-in-groove) or chemical (such as by cocuring, this provided that the parts to be connected are made of a composite material). The difference between cocuring and cobonding techniques is as follows: In cocuring, elements are joined which have not been previously cured, the connection resulting by means of the curing of the two elements combined, not placing any adhesive between the elements to be connected; however in cobonding, one of the elements to be connected has been previously cured, a layer of adhesive being placed between the elements to be connected.

Therefore, accordingly with the above, multiple options are considered for connecting the different elements comprising the structure, depending upon the different means of fixing or joining selected. In particular, when the rim angle, the simple frame and the stiffening plates are made of a composite material, said elements can be connected to one another by cobonding and also by cocuring.

Additionally, the option is included of the rim angle comprising an integral part of the pressure bulkhead, such that the bulkhead be manufactured with the rim angle included.

All of the elements of the assembly structure, by the configuration proper thereof, can be easily manufactured in composite material.

The composite material is defined in the art as the material consisting essentially of small-diameter, high-strength, high-rigidity fibers imbedded in a matrix of a homogenous material.

The composite material considered appropriate for the manufacture of the elements of the structure of the invention is the organic matrix material in which the matrix is a resin of a thermoset material (for example: Epoxy, Polyester, Phenolic, Polyimide or Bismaleinide) or a thermoplastic material. On other hand, materials appropriate for the fiber are Boron or Carbon (Graphite).

The following manufacturing techniques are taken into consideration for obtaining the elements of the assembly structure of the invention:
- RTM: (Resin Transfer Molding). The fibers laid out in fabrics or webs are stacked in a mold. Next, the material of the matrix is transferred to the inside of the mold up to filling the spaces between the fibers, all of which is compacted inside the mold. The composite material is put through a temperature and pressure cycle appropriate for the curing of the matrix resin in an oven or autoclave.
- Prepreg: The fibers previously impregnated in the matrix material are spread on the surface of a mold, stacked in layers up to the required thickness of the element, then being compacted. The material is spread in laminates, or impregnated fibers, giving rise to the different processes respectively known as laying up or filament winding. Additionally, the prepreg process can be rounded out with the thermoforming/stamping technique, in which, by means of applying heat and pressure, the material is shaped up to a mold. The composite material is put through a temperature and pressure cycle appropriate for the curing of the matrix resin in an oven or autoclave.

A simple frame or different sections of a frame may be manufactured using the RTM technique, with the suitable strength and light weight, taking into account that the frame does not receive the pressure loads and thus does not have critical delamination areas, which would entail greater thickness and complex shapes not viable by way of this technique, as previously mentioned.

The rim angle or the different sections of the ring can be manufactured by the technique or prepreg the composite material on a surface in the shape of the ring to be manufactured.

In the case in which the rim angle forms an integral part of the pressure bulkhead, the pressure bulkhead can be manufactured together with the rim angle, all in one, by the prepreg technique, preferably by the fiber-ply prepreg technique.

The buttstrap or the different sections of the buttstrap can also be manufactured by prepreg the composite material on a surface in the shape of the buttstrap to be produced.

Lastly, all of the other structural elements of the assembly structure (tension fittings and stiffening plates) can be produced by the prepreg technique with thermoforming/stamping to achieve doublers.

### BRIEF DESCRIPTION OF THE FIGURES

The following figures are provided in conjunction with this specification to complete the description of the invention and for the purpose of aiding toward a better comprehension of the design features thereof:

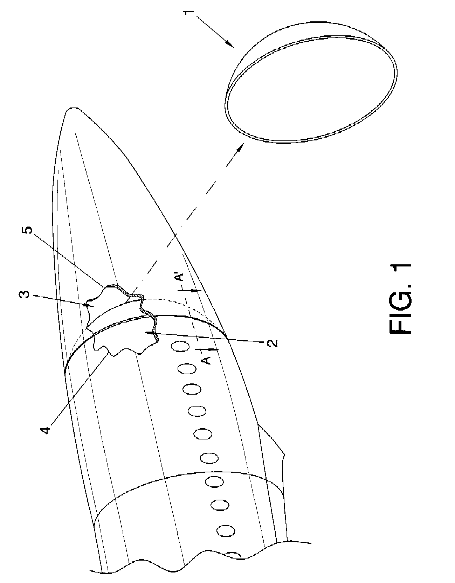

Fig. 1. Schematic perspective view of the placement of the pressure bulkhead in an aircraft.

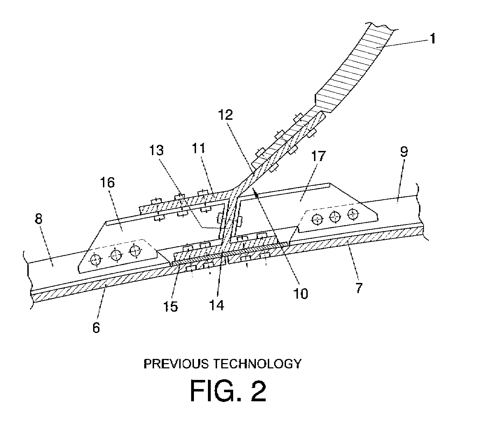

Fig. 2. Section A-A' of the view shown in Fig. 1, showing a conventional aircraft pressure bulkhead assembly structure.
Fig. 3. Section A-A' of the view shown in Fig. 1, showing one embodiment of the aircraft pressure bulkhead assembly structure of the invention.

### References:

1: Pressure bulkhead
2: Pressurized area of the aircraft
3: Non pressurized area of the aircraft
4. Forward section of the fuselage
5. Aft section of the fuselage
6: Forward fuselage skin
7. Aft fuselage skin
8: Forward fuselage stringer
9: Aft fuselage stringer
10: Conventional frame
11: Front portion of frame upper flange
12: Rear portion of frame upper flange
13: Conventional frame center web
14: Lower flange of conventional frame
15: Conventional buttstrap
16: Conventional front tension fitting
17: Convention rear tension fitting
18: Simple frame
18: Upper flange of simple frame
20: Simple frame center web
21: Lower flange of simple frame
22: Rim angle
23: Buttstrap
24: Front tension fitting
25: Rear tension fitting
26: Stiffening plate

### DESCRIPTION OF A PREFERRED EMBODIMENT

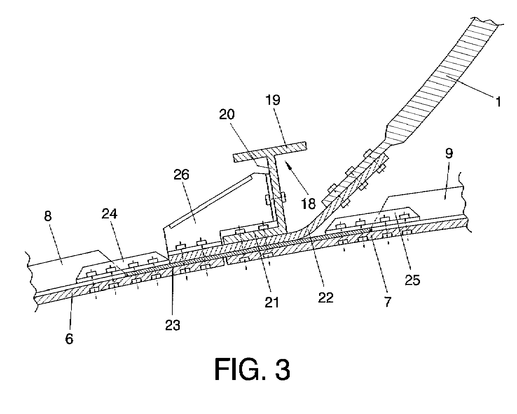

According to the numbering used in the figures, Fig. 3 shows section A-A' of one embodiment of the assembly structure of the invention.

The structure of the invention provides a pressure bulkhead assembly 1 for the aircraft and means for coupling together the forward section 4 and aft section 5 of the aircraft fuselage. The pressure bulkhead 1 divides the pressurized area 2 from the non pressurized area 3 of the aircraft.

As is shown in Figure 3, the embodiment described incorporates a simple frame 18, which has an upper flange 19, a center web 20 and a lower flange 21.

A rim angle 22 is riveted by a rear section slanted upward and back toward the pressure bulkhead 1.

The simple frame 18 is situated on a non-slanted front portion of the rim angle 22 which is situated, in turn, on a buttstrap 23. The simple frame 18, rim angle and buttstrap 23 assembly is riveted to the rear section 7 of the fuselage skin by mean of rivets.

This embodiment incorporates a stiffening plate 26 which is riveted along a rear rim to the center web 20 of the simple frame 18.

The front portion of the rim angle 22 projects forward beyond the area of contact of the lower flange 21 of the frame 19 with the rim angle 22. The following are riveted to this extended area: the rim angle 22, the stiffening plate 26, the buttstrap and the forward section 6 of the skin.

The assembly structure also incorporates some front tension fittings 24 and rear tension fittings 25, which are riveted respectively to the stringers 8, 9 and to the skin 6, 7 of the forward section 4 and aft section 5 of the fuselage.

## Claims

1. **AIRCRAFT PRESSURE BULKHEAD ASSEMBLY STRUCTURE** for coupling a forward section (4) to an aft section (5) of the fuselage, corresponding respectively to a pressurized area (2) and a non pressurized area (3); the forward section (4) and the aft section (5) each comprising respective stringers (8,9) and skin (6,7);
comprising:
- a rim angle (22), which extends out with cylindrical symmetry following the contour of the fuselage, the section of symmetry being L-shaped, with a front portion and a rear portion, the rear portion being slanted upward and backward and connected to the bulkhead (1);
- a simple frame (18), which extends out with cylindrical symmetry following the contour of the fuselage, the section of symmetry having an upper flange (19), a center web (20) and a lower flange (21); the upper flange (21) of the simple frame (18) being connected to the front portion of the rim angle (22);
- a buttstrap (23), which extends out with cylindrical symmetry following the contour of the fuselage, being situated between the front portion of the rim angle (22) and the skin (6, 7); and
- tension fittings (24, 25), which are coupled between the buttstrap (23) and the stringers (8, 9).

2. **AIRCRAFT PRESSURE BULKHEAD ASSEMBLY STRUCTURE** according to claim 1, wherein the skins of the forward section (6) and the aft section (7) of the fuselage are fixed to the assembly which consists of the simple frame (18), the rim angle (22) and the buttstrap (23) via mechanical means, such as rivets.

3. **AIRCRAFT PRESSURE BULKHEAD ASSEMBLY STRUCTURE** according to claim 2, wherein the skins of the forward section (6) and aft section (7) of the fuselage are fixed to the assembly consisting of the buttstrap (23), stringers (8,9) and tension fittings (24, 25) of the respective forward section (6) and aft section (7) of the fuselage via mechanical means, such a rivets.

4. **AIRCRAFT PRESSURE BULKHEAD ASSEMBLY STRUCTURE** according to claim 3, wherein the bulkhead assembly structure additionally comprises a plurality of stiffening plates (26) for preventing the local buckling of the simple frame (18), which is connected between the simple frame (18) and the front portion of the rim angle (22).

5. **AIRCRAFT PRESSURE BULKHEAD ASSEMBLY STRUCTURE** according to claim 3, wherein the rim angle (22) is integrated in the bulkhead (1).

6. **AIRCRAFT PRESSURE BULKHEAD ASSEMBLY STRUCTURE** according to claim 3, wherein the rim angle (22) is fixed to the bulkhead (1) via mechanical means such as rivets.

7. **AIRCRAFT PRESSURE BULKHEAD ASSEMBLY STRUCTURE** according to claim 3, wherein the simple frame (19) consists of a plurality of frame sections arranged along the contour of the fuselage and substantially not spaced from one another; said sections being connected to one another by conventional means, such as joint fittings.

8. **AIRCRAFT PRESSURE BULKHEAD ASSEMBLY STRUCTURE** according to claim 3, wherein the simple frame (19) is made of a composite material, being manufactured by RTM technique.

9. **AIRCRAFT PRESSURE BULKHEAD ASSEMBLY STRUCTURE** according to claim 3, wherein the rim angle (22) is made of a composite material, being manufactured by prepreg technique.

10. **AIRCRAFT PRESSURE BULKHEAD ASSEMBLY STRUCTURE** according to claim 3 wherein the buttstrap (23) is made of a composite material, being manufactured by prepreg technique.

11. **AIRCRAFT PRESSURE BULKHEAD ASSEMBLY STRUCTURE** according to claim 3. wherein the tension fittings (24, 25) are made of a composite material, being manufactured by prepreg technique with thermoforming/stamping.

12. **AIRCRAFT PRESSURE BULKHEAD ASSEMBLY STRUCTURE** according to claim 4, wherein the stiffening plates (26) are made of a composite material, being manufactured by prepreg technique with thermoforming/stamping.

13. **AIRCRAFT PRESSURE BULKHEAD ASSEMBLY STRUCTURE** according to claim 3, wherein the bulkhead (1) and the rim angle (22) are made of a composite material and are connected to one another by means of a technique selected from the group consisting of cocuring and cobonding.

14. **AIRCRAFT PRESSURE BULKHEAD ASSEMBLY STRUCTURE** according to claim 3, wherein the simple frame (18) and the rim angle (22) are made of a composite material and are connected to one another by means of a technique selected from the group consisting of cocuring and cobonding.

15. **AIRCRAFT PRESSURE BULKHEAD ASSEMBLY STRUCTURE** according to claim 4, wherein the stiffening plates (26), the simple frame (18) and the rim angle (22) are made of a composite material and are connected to one another by means of a technique selected from the group consisting of cocuring and cobonding.
